Europäisches Patentamt

(19) European Patent Office

Office européen des brevets

(11) Numéro de publication: **0 249 553**
**B1**

(12) **FASCICULE DE BREVET EUROPEEN**

(45) Date de publication du fascicule du brevet:
**24.01.90**

(21) Numéro de dépôt: **87401292.5**

(22) Date de dépôt: **09.06.87**

(51) Int. Cl.⁴: **B64D 29/06**

(54) **Dispositif d'accrochage arrière de sécurité d'un turboréacteur sur un mat d'avion.**

(30) Priorité: **10.06.86  FR 8608336**

(43) Date de publication de la demande:
**16.12.87 Bulletin 87/51**

(45) Mention de la délivrance du brevet:
**24.01.90 Bulletin 90/4**

(84) Etats contractants désignés:
**DE FR GB**

(56) Documents cités:
**FR-A- 1 108 012**
**FR-A- 2 264 241**
**GB-A- 1 236 917**
**GB-A- 2 045 357**
**US-A- 4 065 077**
**US-A- 4 439 106**

(73) Titulaire: **SOCIETE NATIONALE D'ETUDE ET DE CONSTRUCTION DE MOTEURS D'AVIATION, "S.N.E.C.M.A.", 2, boulevard du Général Martial Valin, F-75724 Paris Cédex 15(FR)**

(72) Inventeur: **Pachomoff, Guy Robert, 16, Chemin des Longaines, F-91100 - Corbeil Essonnes(FR)**
Inventeur: **Rolinat, Raymond Maurice, 44, rue des Déportés, F-77210 - Avon(FR)**

(74) Mandataire: **Moinat, François et al, S.N.E.C.M.A. Service des Brevets Boîte Postale 81, F-91003 Evry Cédex(FR)**

ACTORUM AG

## Description

La présente invention concerne les dispositifs d'accrochage des turbomachines sous les ailes d'un avion et plus particulièrement l'accrochage de la partie arrière du moteur, le mot "arrière" étant pris par rapport au sens de l'écoulement du flux dans le moteur pour désigner la partie du moteur voisine de la zone d'éjection du flux.

De façon connue, les turboréacteurs à fort taux de dilution sont suspendus à un pylône par des moyens de suspension adjacents à chacune de leurs extrémités et comportent également des organes s'opposant au couple de rotation engendré par le fonctionnement du turboréacteur, ces organes pouvant être des barres accouplées fixées à une extrémité sur un des moyens de suspension et à leur autre extrémité sur des parties du moteur diamétralement opposées dans un plan horizontal.

La suspension arrière du moteur quant à elle, est assurée généralement par trois biellettes fixées sur trois chapes d'une bride du carter du moteur et suspendues en trois points du mat arrière du pylône avion.

En cas de rupture d'une des trois liaisons de suspension, les deux biellettes restantes doivent supporter la totalité de la charge qui auparavant était répartie sur trois biellettes, d'une part, ce qui risque d'amener la rupture successive des deux biellettes restantes, et donc le décrochage total du moteur, et d'autre par même sans rupture des deux bielletttes arrières, le couple de rotation engendré par le fonctionnement du moteur sur les barres anticouples risque de devenir prohibitif et d'amener des conséquences dommageables à la tenue du moteur.

On a donc proposé des systèmes de sécurité pour éviter qu'une rupture d'une biellette arrière n'aboutisse aux conséquences ci-dessus exposées. Une solution a consisté à doubler les biellettes arrières de suspension sur les trois axes mais cette disposition présente l'inconvénient en cas de rupture d'une des deux biellettes constituant chaque paire, de créer une panne dormante, alors que l'élément de secours (la biellette intacte) est incapable à lui seul de supporter les efforts maximum, sauf à la surdimensionner outrageusement au détriment du poids et de l'encombrement du dispositif de suspension.

Pour résoudre le problème posé sans rencontrer les inconvénients du système de sécurité antérieur, l'invention propose d'ajouter aux trois biellettes de suspension habituelles une quatrième biellette de sécurité montée de telle sorte qu'en fonctionnement normal, ladite biellette de sécurité soit absolument "transparente" aux efforts de suspension et qu'elle ne devienne active que si l'une des trois biellettes du système normal de suspension vient à se rompre.

Le document GB-A 1 236 917 correspondant au préambule de la revendication 1, mentionne l'existence d'une telle biellette de sécurité mais n'indique nullement l'existence de moyens d'activation de cette biellette.

Seule est indiqué le fait qu'entre la biellette et son axe est interposée une rondelle élastique. Cette rondelle est comprimée lors de la mise sous charge de la biellette de sécurité. Une telle structure n'assure pas qu'en fonctionnement ordinaire, la biellette de sécurité ne subisse pas une charge partielle.

Un autre but de l'invention est de proposer un dispositif de sécurité qui permette de générer un signal d'alarme lorsqu'il se met en fonction, signal qui puisse être transmis au pilote ou être utilisé directement comme signal de commande de la régulation du moteur afin de diminuer le régime moteur pour réduire les efforts exercés par le moteur sur le système de suspension.

Un autre but de l'invention, enfin, est de proposer un dispositif de suspension de sécurité qui, même en cas de rupture d'une des biellettes soit apte, si nécessaire à supporter des efforts maxima de même grandeur que les efforts maxima admissibles sur le système de suspension normal.

L'invention a donc pour objet un dispositif d'accrochage arrière de sécurité d'un turboréacteur sur le mat porté par un avion qui, outre les trois premières biellettes connues assurant l'accrochage du turboréacteur en trois points du mat, comporte une quatrième biellette, dite de sécurité dont une extrémité est montée tournante sur une quatrième chape du turboréacteur et l'autre extrémité est montée tournante en un quatrième point du mat par l'intermédiaire d'un arbre de fixation.

Selon l'invention, le dispositif comporte des moyens d'activation aptes à faire passer la biellette de sécurité d'une première position passive où, en régime normal, elle ne supporte aucune charge à une seconde position active de sécurité où elle supporte une partie de la charge du turboréacteur, sous l'action d'un effort initial sur la biellette de sécurité dû à la rupture d'une quelconque des trois premières biellettes d'accrochage. Selon l'invention le dispositif comporte en combinaison des moyens de verrouillage de l'arbre de fixation de la biellette de sécurité dans une position active de sécurité.

Selon un mode préférentiel de réalisation, les moyens de verrouillage de l'arbre de fixation de la biellette de sécurité comportent deux positions actives de sécurité, la biellette passant de la première position passive à l'une ou l'autre des deux positions actives de sécurité selon que l'effort initial sur la biellette de sécurité est un effort de traction ou de compression.

De façon pratique, l'arbre de fixation de la biellette de sécurité est monté tournant dans un alésage des brides constituant le mat de support et les moyens d'activation de la biellette de sécurité sont constitués par une came excentrée par rapport à l'axe dudit alésage, la came supportant la biellette de telle sorte qu'au repos l'axe longitudinal de symétrie de la biellette de sécurité ne passe pas par l'axe de l'alésage et qu'en position active de sécurité ledit axe longitudinal de symétrie passe par ou à proximité de l'axe de rotation de l'arbre de fixation dans l'alésage pour permettre à la biellette de supporter la charge du turboréacteur.

D'autres caractéristiques et des détails de réalisation de l'invention seront explicités dans le complément suivant de la description en regard des planches annexées parmi lesquelles :

- la figure 1 montre en vue partiellement éclatée la suspension d'un turboréacteur sous une aile d'avion, dont le détail A fait l'objet de la présente invention ;
- la figure 2 représente en vue suivant G de la figure 1, le mat de suspension arrière auquel est suspendu le moteur (dont seule la bride de suspension a été représentée) au moyen des trois biellettes normales et de la biellette de sécurité ;
- les figures 2a et 2b sont les sections resp. AA et BB de la figure 2 ;
- la figure 3 montre également en vue suivant G de la figure 1 un agrandissement du mat de suspension arrière au niveau de la biellette de sécurité ;
- la figure 4 montre le mat de suspension en vue selon F de la figure 3 avec en vue arrachée la section CC de l'arbre de fixation de la biellette de sécurité ;
- la figure 5 montre les moyens de verrouillage en vue suivant H de la figure 4 ;
- et la figure 5a montre en section EE de la figure 5 le doigt coulissant du bras de verrouillage.

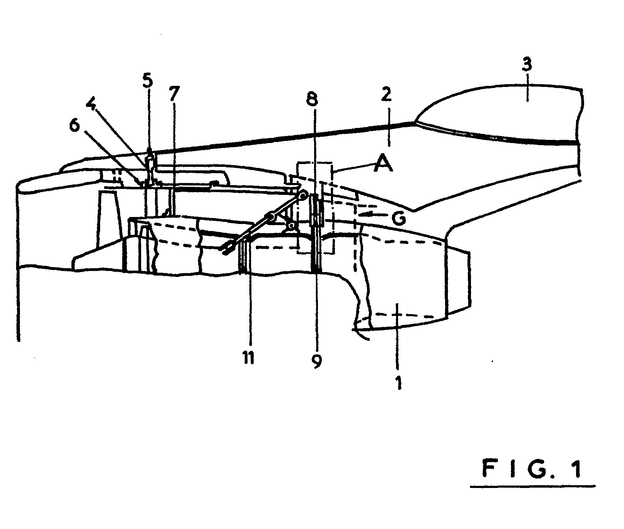

En référence à la figure 1, le turboréacteur 1 est suspendu au pylône 2 solidaire de l'aile 3 d'un avion, au moyen de biellettes de suspension avant 4 suspendues à la partie avant 5 du pylône et reliées à une bride de fixation avant 6 portée par le carter de soufflante 7 et au moyen d'un mat arrière 8 porté par le pylône 2 et relié à une bride de suspension arrière 9 du moteur par trois biellettes de suspension 10. Des barres de reprise de poussée 11 relient le mat arrière à deux points de fixation du carter symétriquement disposés de part et d'autre d'un plan vertical diamétral du moteur.

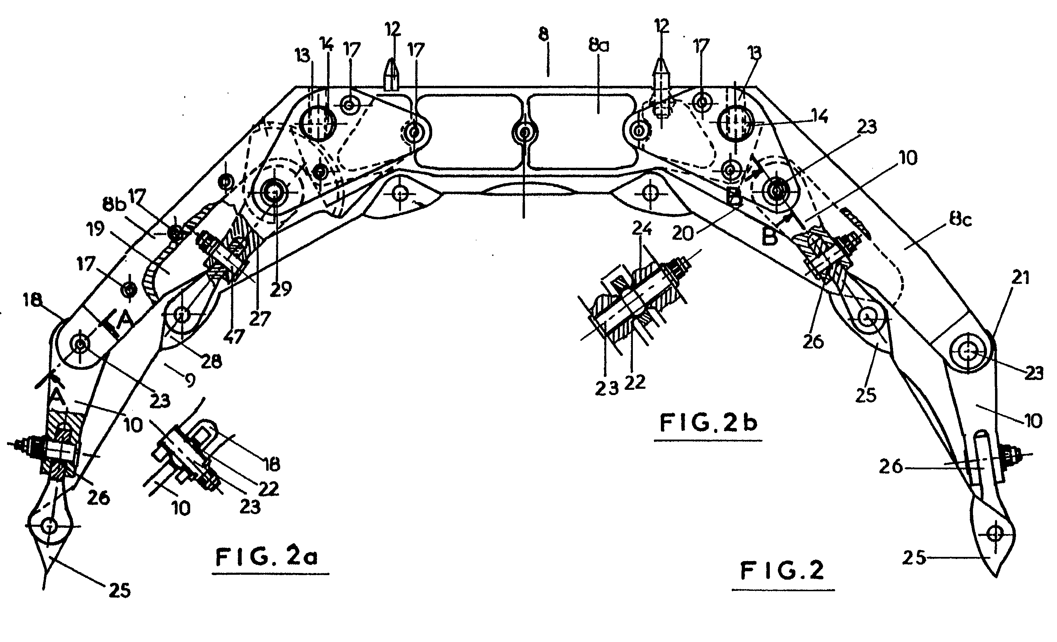

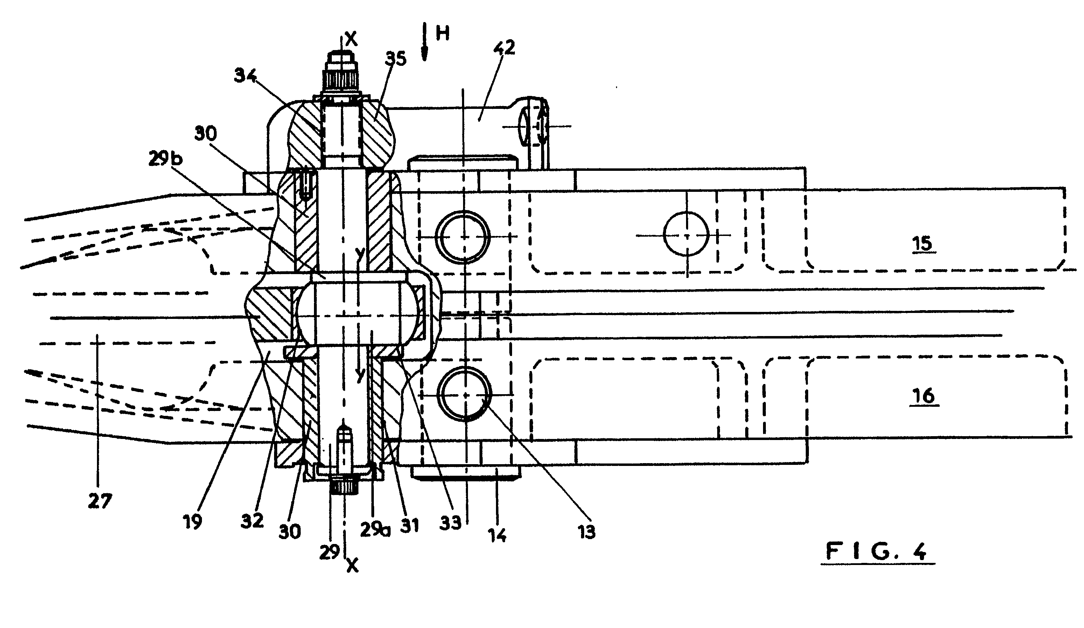

En se reportant maintenant à la figure 2, le mat de suspension arrière 8 est centré sur le pylône 2 par des pions 12 et fixé sur le pylône par des vis engagées dans des alésages verticaux 13 coopérant avec des axes de maintien 14. Le mat 8 comporte une partie horizontale 8a et deux parties inclinées 8b et 8c entourant la partie supérieure du moteur et est réalisé sous forme de deux brides forgées 15 et 16 symétriques l'une de l'autre (voir figure 4) comportant chacune de façon monobloc les parties 8a, 8b, 8c, les deux brides étant serrées l'une contre l'autre par des boulons 17. Les brides 15 et 16 comportant des évidements internes 18,19,20,21 se faisant face et trois de ces évidements 18,20,21 servent de logement aux trois biellettes de suspension 10 montées au moyen de rotules 22 sur des axes 23 munis de paliers épaulés 24. Les biellettes 10 ont leur extrémité libre accrochée à des chapes 25 de la bride 9 du carter moteur et dans le mode de réalisation représenté ici sont séparées en deux parties solidarisées par un joint 26 du type cardan afin que la suspension du moteur puisse supporter les éventuelles dilatations axiales subies par le moteur lors de son fonctionnement.

Le dispositif de suspension de sécurité selon l'invention est constitué par une quatrième biellette 27 montée tournante d'une part sur une quatrième chape 28 d'axe zz de la bride de suspension 9 et d'autre part sur un arbre de fixation 29 monté tournant au moyen de deux paliers 30 dans un alésage 31 traversant de part en part les deux brides 15 et 16 formant le mat 8. L'arbre de fixation 29 comporte à sa partie centrale située dans l'évidement 19 entre les brides 15 et 16, une came cylindrique 29a d'axe yy excentré par rapport à l'axe de rotation xx de l'arbre 29. La biellette 27 est montée sur la came 19a au moyen d'une douille à rotule 32 entre un épaulement 29b de la came et une rondelle 33.

Au repos, c'est à dire lorsque la biellette de sécurité est inactive, l'axe longitudinal yz de symétrie de la biellette de sécurité 27 coupant les axes yy et zz est tel que la droite xy passant par l'axe de rotation xx de l'arbre et par celui yy de la came soit orthogonal à l'axe yz de telle sorte que, le moteur étant suspendu par ses trois biellettes 10, la biellette de sécurité 27 ne participe pas à l'effort de suspension du moteur.

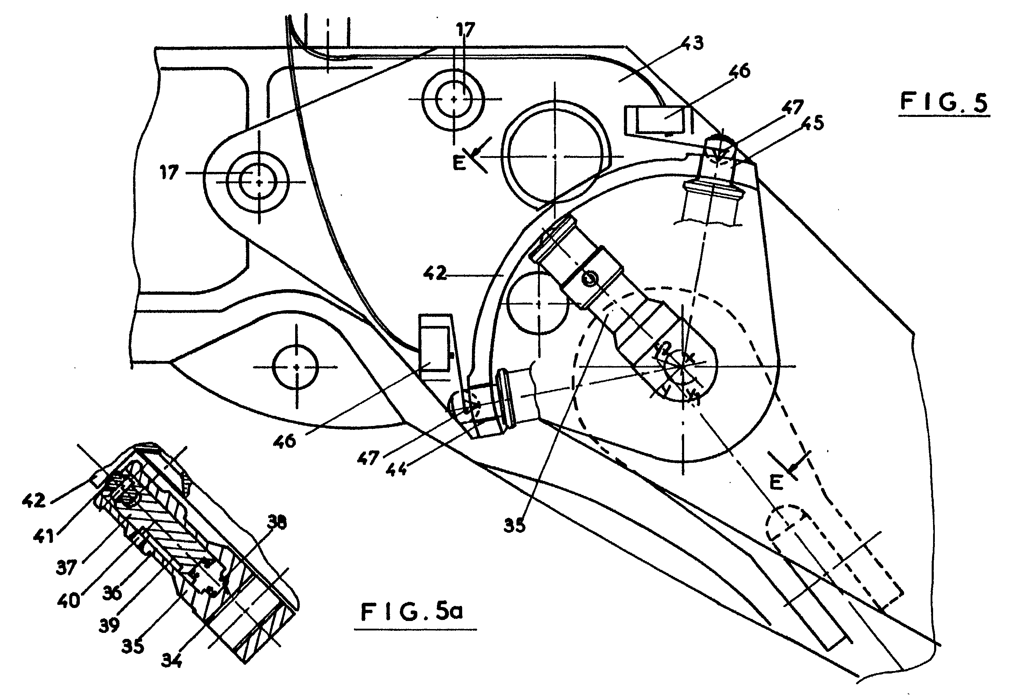

L'arbre de fixation 29 comporte une extrémité cannelée 34 sur laquelle est montée un bras de verrouillage 35 (voir figures 5 et 5a) orthogonal à l'arbre 29 et que celui-ci peut entrainer en rotation. Le bras 35 comporte un alésage 36 dans lequel peut coulisser un doigt cylindrique 37 sous l'action d'un ressort 38 disposé dans le fond de l'alésage 36. Une rainure longitudinale 39 du doigt 37 coopère avec un pion 40 vissé dans un taraudage radial du bras 35 pour guider le doigt et limiter sa course. L'extrémité libre du doigt 37 comporte une roulette 41 qui vient en appui contre une piste circulaire 42 centrée sur l'axe xx et portée par un flasque 43 plaqué extérieurement contre la bride 15 sur laquelle il est fixé pa les boulons 17. La piste circulaire 42 comporte à chacune de ses extrémités un perçage 44 (resp. 45) avec lequel le doigt 37 peut coopérer pour former une position de verrouillage constituant les positions actives de sécurité de la biellette. Le flasque 43 porte également deux microrupteurs 46 dont le grain 47 est disposé dans l'axe des perçages 44, 45, les microrupteurs 46 pouvant commander un signal d'alarme dans le cokpit de l'avion ou agir directement sur la régulation du turboréacteur pour commander une diminution du régime moteur.

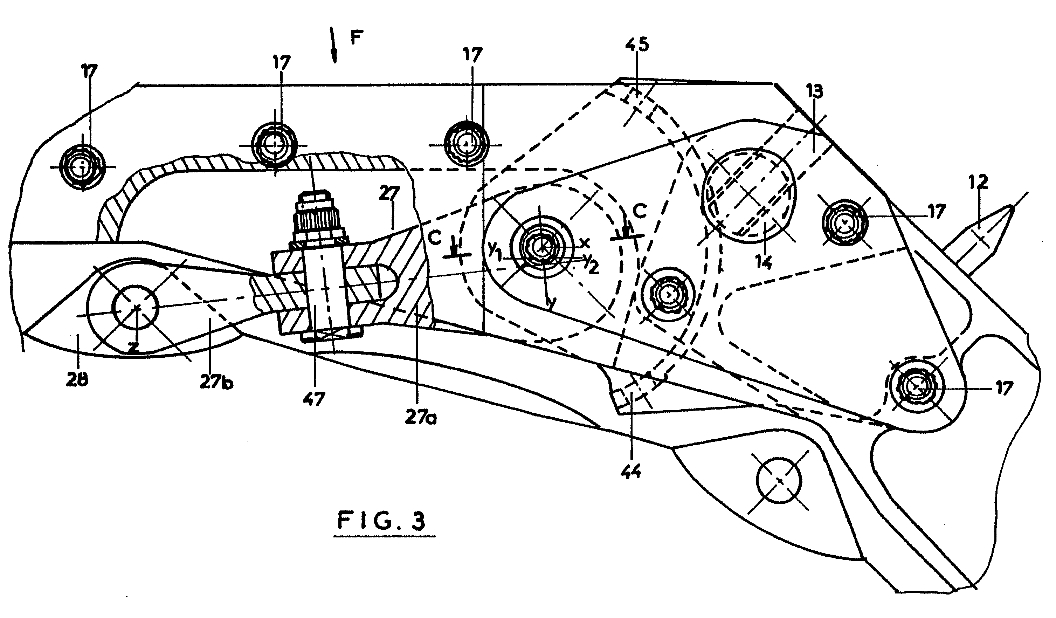

Quand la biellette de sécurité est au repos, l'axe de la came est dans la position y des figures 3 et 5 et le bras de verrouillage est dans la position dessinée en traits pleins sur la figure 5. La roulette 41 est en appui sur la piste circulaire 42.

Si une des biellettes 10 vient à se rompre, une partie de la masse du moteur est alors supportée par la biellette de sécurité 27 et cet effort initial (qui peut être un effort de traction ou de compression selon que telle ou telle autre biellette 10 s'est rompue) sur la biellette 27, tend à faire tourner la came 29a de telle sorte que l'axe yy passe dans la position yl (figures 3 et 5) si l'effort sur la biellette 27 est une traction ou dans la position y2 si l'effort initial est une compression de la biellette. Ce faisant, l'axe 29 a tourné lui aussi entrainant dans sa rotation le bras de verrouillage 35 dont la roulette roule sur la piste 42 jusqu'à ce qu'elle rencontre un des deux perçages 44 ou 45, dans lequel le doigt 37 vient se bloquer sous l'action du ressort 38 et enclenchant le microrupteur 46. Le bras 35 étant ainsi verrouillé (positions extrêmes de la figure 5) bloque l'axe 29

dans un des deux positions actives de sécurité dans lesquelles la biellette 27 va jouer son rôle de suspension du moteur au même titre que le faisait antérieurement la biellette 10 qui s'est rompue. De façon à pouvoir supporter, comme les biellettes 10, des faibles déplacements axiaux du moteur, la biellette 27 est conformée en deux éléments, l'un amont 27a qui porte l'arbre de fixation 29 et l'autre aval 27b solidaire de la chape 28, les deux éléments 27a et 27b étant solidarisés par un accouplement 47 du type cardan.

Un tel dispositif de sécurité a pour avantage outre sa simplicité et sa légéreté, de permettre de supporter une charge maximale égale à celle que supporte d'ordinaire la biellette rompue qu'il vient remplacer.

Il présente également pour avantage de générer un signal d'alarme qui peut être utilisé soit pour prévenir le pilote de l'avion de l'incident qui vient de se produire afin qu'il puisse réduire le régime moteur pour soulager la suspension arrière, soit pour agir directement sur la régulation des moteurs pour en réduire le régime.

## Revendications

1. Dispositif d'accrochage arrière de sécurité d'un turboréacteur sur le mat porté par un avion comportant, outre trois premières biellettes (10) connues assurant l'accrochage du turboréacteur en trois points du mat (8), une quatrième biellette (27) dite de sécurité dont une extrémité est montée tournante sur une quatrième chape (28) du turboréacteur et l'autre extrémité est montée tournante en un quatrième point du mat par l'intermédiaire d'un arbre de fixation (29) caractérisé en ce qu'il comporte des moyens d'activation (29a) aptes à faire passer la biellette de sécurité (27) d'une première position passive où, en régime normal, elle ne supporte aucune charge à une seconde position active de sécurité où elle supporte une partie de la charge du turboréacteur sous l'action d'un effort initial sur la biellette de sécurité dû à la rupture d'une quelconque des trois premières biellettes d'accrochage, et en ce qu'il comporte des moyens de verrouillage (35,42,44,45) de l'arbre de fixation de la biellette de sécurité (27) dans une position active de sécurité.

2. Dispositif selon la revendication 1, caractérisé en ce que l'arbre de fixation (29) de la biellette de sécurité (27) est monté tournant dans un alésage (31) des brides (15,16) constituant le mat de support et en ce que les moyens d'activation de la biellette de sécurité sont constitués par une came (29a) excentrée par rapport à l'axe (xx) dudit alésage, la came supportant la biellette (27) de telle sorte qu'au repos l'axe longitudinal (yz) de symétrie de la biellette de sécurité ne passe pas par l'axe (xx) de l'alésage et qu'en position active de sécurité ledit axe longitudinal de symétrie passe par l'axe de rotation de l'arbre de fixation dans l'alésage pour permettre à la biellette (27) de supporter la charge du turboréacteur.

3. Dispositif selon l'une quelconque des revendications 1 ou 2, caractérisé en ce que les moyens de verrouillage de l'arbre de fixation de la biellette de sécurité comportent deux positions actives de sécurité (44,45), la biellette passant de la première position passive à l'une ou l'autre des deux positions actives de sécurité selon que l'effort initial sur la biellette de sécurité est un effort de traction ou de compression.

4. Dispositif selon la revendication 3, caractérisé en ce que les moyens de verrouillage sont constitués par un bras (35) orthogonal à l'arbre de fixation (29) par lequel il est entrainé en rotation au moyen de cannelures (34) de l'arbre, le bras comportant un alésage (36) dans lequel peut coulisser un doigt (37) cylindrique poussé par un ressort (38), le doigt coopérant pendant la rotation du bras lors du passage en position active de sécurité avec une piste circulaire (42) portée par une bride du mat, la piste circulaire comportant à chacune de ses extrémités un perçage (44,45) dans lequel le doigt (37) est apte à venir se verrouiller sous l'action du ressort (38) lorsque l'une des deux positions actives de sécurité est atteinte.

5. Dispositif selon la revendication 4 caractérisé en ce que la piste circulaire (42) des moyens de verrouillage supporte deux microrupteurs (46) dont le grain (47) peut être actionné par le doigt (37) lors de son verrouillage dans un des perçages (44,45) de la piste pour créer un signal d'alarme de mise en action de la biellette de sécurité (27).

6. Dispositif selon l'une quelconque des revendications 1 à 5, caractérisé en ce que la biellette de sécurité est constituée de deux éléments, l'un amont (27a) comportant l'arbre de fixation (29) sur le mat et l'autre aval (27b) monté sur la chape (28) du turboréacteur et en ce que les deux éléments amont et aval de la biellette sont solidarisés par un accouplement (47) du type cardan.

7. Dispositif selon la revendication 6, caractérisé en ce que l'élément amont (27a) est monté sur la came (29a) de l'arbre de fixation (29) au moyen d'une douille à rotule (32).

## Patentansprüche

1. Sicherheitsvorrichtung für die hintere Aufhängung eines Turboluftstrahltriebwerks an der von einem Flugzeug getragenen Tragstrebe mit einer zusätzlich zu drei bekannten ersten Stangen zur Aufhängung des Turboluftstrahltriebwerks in drei Punkten der Tragstrebe (8) vorgesehenen, als Sicherheitsstange bezeichneten vierten Stange (27), die mit einem Ende drehbar an einem vierten Gabelgelenk (28) des Turboluftstrahltriebwerks und mit ihrem anderen Ende über eine Befestigungswelle (29) drehbar an einem vierten Punkt der Tragstrebe montiert ist, dadurch gekennzeichnet, daß Aktivierungsmittel (29a) vorgesehen sind, die der Sicherheitsstange (27) den Übergang aus einer ersten passiven Position, in der der sie bei normalem Betrieb keinerlei Last trägt, in eine aktive zweite Position, die Sicherheitsposition, ermöglichen, in der sie einen Teil der Last des Turboluftstrahltriebwerks trägt, wobei der Übergang von der ersten Position in die Sicherheitsposition unter der Einwirkung einer durch den Bruch irgendeiner der drei ersten Aufhängungsstangen verursachten Anfangsbelastung erfolgt, und daß Mittel (35, 42, 44, 45) zur Verriegelung der Befestigungswelle der Sicherheitsstange (27) an einer aktiven Sicherheitsposition vorgesehen sind.

2. Vorrichtung nach Anspruch 1, dadurch gekennzeichnet, daß die Befestigungswelle (29) der Sicherheitsstange (27) drehbar in einer Bohrung (31) der die Tragstrebe bildenden Flansche (15, 16) montiert ist, und daß die Mittel zur Aktivierung der Sicherheitsstange von einer zur Achse (xx) dieser Bohrung exzentrischen Nocke (29a) gebildet sind, die die Sicherheitsstange (27) in der Weise trägt, daß die Symmetrielängsachse (yz) der Sicherheitsstange im Ruhezustand nicht durch die Achse (xx) der Bohrung verläuft und daß die Symmetrielängsachse in der aktiven Sicherheitsposition durch die Drehachse der Befestigungswelle (29) in der Bohrung verläuft und die Sicherheitsstange (27) die Last des Turboluftstrahltriebwerks tragen kann.

3. Vorrichtung nach einem der Ansprüche 1 oder 2, dadurch gekennzeichnet, daß die Mittel zur Verriegelung der Befestigungswelle der Sicherheitsstange zwei aktive Sicherheitspositionen (44, 45) haben und daß die Sicherheitsstange in Abhängigkeit davon, ob die auf sie einwirkenden Anfangsbelastung eine Zug- oder eine Druckbelastung ist, aus ihre ersten passiven Position in eine oder die andere der beiden aktiven Sicherheitspositionen übergeht.

4. Vorrichtung nach Anspruch 3, dadurch gekennzeichnet, daß die Verriegelungsmittel aus einem rechtwinklig zu der Befestigungswelle (29) verlaufenden Arm (35) bestehen, der die Befestigungswelle (29) mit Hilfe von in der Welle vorgesehenen Nuten (34) mit einer Drehbewegung beaufschlagt, und daß der Arm eine Bohrung (36) besitzt, in der ein von einer Feder (38) belasteter zylindrischer Finger (37) gleiten kann, der während der Drehung des Arms beim Obergang in die aktive Sicherheitsposition mit einer von einem Flansch der Tragstrebe getragenen kreisförmigen Führungsbahn (42) zusammenwirkt, die an jedem ihrer Enden eine Lochung (44, 45) besitzt, in der der Finger (37) sich unter der Wirkung der Feder (38) verriegeln kann, wenn eine der beiden aktiven Sicherheitspositionen erreicht ist.

5. Vorrichtung nach Anspruch 4, dadurch gekennzeichnet, daß die kreisförmige Führungsbahn (42) zwei Mikroschalter (46) trägt, deren Steuerglied (47) von dem Finger (37) bei dessen Verriegelung in einer der Lochungen (44, 45) der Führungsbahn betätigbar ist, um ein das Wirksamwerden der Sicherheitsstange (27) anzeigendes Alarmsignal zu erzeugen.

6. Vorrichtung nach einem der Ansprüche 1 bis 5, dadurch gekennzeichnet, daß die Sicherheitsstange aus zwei Elementen besteht, von denen das stromaufwärts gelegene Element (27a) die Befestigungswelle (29) zur Befestigung an der Tragstrebe aufweist, während das stromabwärts gelegene Element (27b) an dem Gabelgelenk (28) des Turboluftstrahltriebwerks montiert ist, und daß das stromaufwärts gelegene Element und das stromabwärts gelegene Element durch eine Kardankupplung (47) miteinander verbunden sind.

7. Vorrichtung nach Anspruch 6, dadurch gekennzeichnet, daß das stromaufwärts gelegene Element (27a) mit einer Kugelgelenkbuchse (32) an der Nocke (29) der Befestigungswelle (29) montiert ist.

## Claims

1. A rear safety device for securing a turbojet engine to the mast carried by an aircraft and comprising three known first links (10) for securing the turbojet engine to three places on the mast (8) and a fourth or safety link (27) having one end mounted for rotation on a fourth yoke (28) on the turbojet engine and its other end mounted via a securing shaft (29) so as to be rotatable at a fourth place on the mast, characterised in that the device comprises actuating means (29a) adapted to move the safety link (27) from a first passive position in which, during normal operation, it does not bear any load to a second active or emergency position in which it bears part of the load of the turbojet engine as a result of an initial force acting on the safety link after breakage of any of the first three securing links, and the device also comprises means (35, 42, 44, 45) whereby the shaft for securing the safety link (27) is locked in an active emergency position.

2. A device according to claim 1, characterised in that the shaft (29) for securing the safety link (27) is mounted for rotation in a bore (31) in the flanges (15, 16) constituting the bearing mast and the means for actuating the safety link comprise a cam (29a) which is eccentric with respect to the bore axis (xx), the cam bearing the link (27) so that at rest the longitudinal axis (yz) of symmetry of the safety link does not extend through the bore axis (xx) whereas in the active emergency position the longitudinal axis of symmetry extends through the axis of rotation of the securing shaft in the bore, thus enabling the link (27) to bear the load of the turbojet engine.

3. A device according to claim 1 or 2, characterised in that the means for locking the shaft securing the safety link comprise two active emergency positions (44, 45), the link moving from the first passive position to one or the other of the two active emergency positions depending on whether the initial force on the safety link is a tensile or a compressive force.

4. A device according to claim 3, characterised in that the locking means comprise an arm (35) at right angles to the securing means (25), which drives it in rotation via grooves (44) in the shaft, the arm being formed with a bore (36) in which a cylindrical finger (37) can slide when pushed by a spring (38), and when the arm rotates in transition to the active emergency position the finger co-operates with a circular track (47) on a flange of the mast, the circular track being formed at each end with a perforation (44, 45) in which the finger (37) is adapted to be locked by the action of a spring (38) when one of the two active emergency positions is reached.

5. A device according to claim 4, characterised in that the circular track (47) of the locking means bears two microswitches (46) having points (47) which can be actuated by the finger (37) when locked in one of the perforations (44, 45) in the track, thus giving an alarm signal for operating the safety link (27).

6. A device according to any one of claims 1 to 5, characterised in that the safety link is made up of two components, an upstream component (27a) comprising the shaft (29) for securing on the mast, and a downstream component (27b) mounted on the turbojet engine yoke (28), and the upstream and downstream components of the link are secured by a universal joint-type coupling (47).

7. A device according to claim 6, characterised in that the upstream component (27a) is mounted on the cam (29a) of the securing shaft (29) via a sleeve and ball joint (32).

F I G. 1

FIG. 2a

FIG. 2b

FIG. 2

EP 0 249 553 B1

FIG. 3

X

H

34 35 42

30

29b

27 19 32 30 29a 31 33 14 13

29

X

15

16

EP 0 249 553 B1

F I G. 4

FIG.5

FIG.5a

EP 0 249 553 B1